# EUROPÄISCHE PATENTSCHRIFT

(11) **EP 2 946 134 B1**
(45) Veröffentlichungstag und Bekanntmachung des Hinweises auf die Patenterteilung: **17.10.2018**
(21) Anmeldenummer: 14700058.2
(22) Anmeldetag: 03.01.2014
(51) Int. Cl.: F16L 23/00, F16L 23/18, F16L 29/04, F16L 55/10

(54) **NOTTRENNKUPPLUNG**
EMERGENCY RELEASE COUPLING
RACCORD À SÉPARATION DE SÛRETÉ

(30) Priorität: 17.01.2013 DE 102013100485
(43) Veröffentlichungstag der Anmeldung: 25.11.2015
(73) Patentinhaber: Von Keitz, Andreas, 65582 Diez (DE)
(72) Erfinder: Von Keitz, Andreas, 65582 Diez (DE)
(74) Vertreter: Blumbach · Zinngrebe Patent- und Rechtsanwälte
(86) Internationale Anmeldenummer: PCT/EP2014/050051
(87) Internationale Veröffentlichungsnummer: WO 2014/111279

(56) Entgegenhaltungen:
- EP-A1- 0 517 127
- WO-A1-02/42015
- WO-A1-95/10720
- DE-U1- 9 114 005
- DE-U1- 20 007 117
- DE-U1- 20 113 541
- GB-A- 952 755
- US-A- 3 495 853
- US-A1- 2010 041 287

## Beschreibung

Die Erfindung bezieht sich auf eine Nottrennkupplung zur Trennung zweier Leitungen bei übermäßigem Zug zwischen einer ersten und einer zweiten Kupplungsseite.

Bei Befüllung oder Entnahme von Fluiden aus Tanks werden gewöhnlich zwei Leitungen miteinander gekuppelt, wozu eine betätigbare Kupplung eingesetzt wird. Während eine der Leitungen als ortsfest angesehen werden kann, ist die andere Leitung beweglich und mit einem Kraftfahrzeug verbunden. Als Fahrzeug kommen Kraftfahrzeuge, Tanklastwagen, Waggons, Schiffe und selbst Flugzeuge in Betracht. Wenn sich solche Fahrzeuge in Bewegung setzen, während noch die Verbindung der beiden Leitungen über die betätigbare Kupplung existiert, kann es vorkommen, dass die Leitungsverbindung zerreißt. Um dies zu vermeiden, wird in den Verbindungsleitungszug eine Nottrennkupplung angeordnet, die bei übermäßigem Zug anspricht und die beiden gekuppelten Leitungen voneinander trennt. Die Nottrennkupplung weist selbsttätig schließende Fluidsperren auf, die im Falle der Trennung der Leitungen ansprechen und die jeweilige Leitung absperren. Auf diese Weise wird verhindert, dass ungewollte Bewegungen des Fahrzeuges zu einem umweltschädlichen Notfall führen.

Als zu transportierende Fluide kommen tiefkalte Medien, zum Beispiel verflüssigtes Erdgas, in Betracht und müssen über miteinander gekuppelte Leitungen gefördert werden. Für solche gekuppelten Leitungen benötigt man jeweils eine Nottrennkupplung, die den Bedingungen von tiefkalten Medien Stand hält.

Eine Nottrennsicherheitskupplung zur Trennung zweier Leitungen bei übermäßigem Zug zwischen einer ersten und zweiten Kupplungsseite ist aus der DE 91 14 005 U1 und der EP 0 517 127 A1 bekannt. Es gibt zwei Kupplungshälften, die über Halteringabschnitte zusammengehalten werden, die von außen in Ringnuten der Anschlussränder der Kupplungshälften eingreifen und ihrerseits von einem Halteelement umfasst werden. Zwischen den Kupplungshälften kann eine zusammenzupressende Dichtung angeordnet sein, damit sich die Kupplungsteile bei Wegfallen der Radialbelastung leichter lösen. Eine solche Pressdichtung ist bei tiefer Temperatur wenig wirksam.

Abreißkupplungen sind aus den DE 200 07 117 U1 und DE 201 13 541 U1 bekannt und weisen zwischen aneinander liegenden Flanschen der Kupplungshälften eine Verbindungseinrichtung auf, die durch Seilzug gelöst werden kann. Als Dichtmittel ist ein O-Ring eingesetzt, der eine Pressdichtung darstellt.

Aus DE 198 14 559 A1 ist eine Rohrverbindung mit stirnseitig einander gegenüberliegenden Bunden bekannt, bei der die Bunde mit einer zwischenliegenden Dichtung mittels einer lösbaren Spannvorrichtung unter Bildung einer fluiddichten Verbindung gegeneinander verspannt sind. Als Dichtung ist eine O-Ring-Dichtung oder eine Flachdichtung genannt. Solche Dichtungen sind bei tiefen Temperaturen wenig wirksam.

Der Erfindung liegt die Aufgabe zugrunde, eine robuste und einfach gebaute Nottrennkupplung zu schaffen, die ihrer Art nach auch für Tieftemperaturanwendungen geeignet ist. Ferner soll man die Kraft, bei der sich die Nottrennkupplung löst, durch entsprechende Bemessungen der Nottrennkupplung vorbestimmen können.

Die neue Nottrennkupplung weist zwei Kupplungshälften mit jeweils selbsttätig schließenden Fluidsperren im Inneren und anlagedichte Endflansche an sich gegenüberstehenden Kupplungsseiten auf.

Die anlagedichten Endflansche werden durch eine Reihe von Ringsegmenten aufeinander gepresst, um eine fluiddichte Verbindung zwischen den Endflanschen zu ergeben. Dabei werden die in Eingriff miteinander stehenden Endflansche von den Ringsegmenten umklammert, jedoch so, dass sich die Umklammerung bei übermäßigem Zug lösen kann. Zu diesem Zweck weisen die Ringsegmente Schrägflächen oder Konusflächen auf, die so gerichtet sind, dass bei einem Zug auf die Nottrennkupplung sich radiale Kräfte auf die Ringsegmente entgegen den Kräften eines Vorspannungselementes entwickeln. Wenn die sich nach außen gerichteten radialen Kräfte der Ringsegmente die radial nach innen gerichteten Kräfte des Vorspannungselementes übersteigen, löst sich die Nottrennkupplung. Durch Bemessung des Vorspannungselementes hinsichtlich der radial nach innen gerichteten Kräfte hat man es deshalb in der Hand, die Zugkraft auf die Leitungen einzustellen, bei der eine Nottrennung zustande kommt.

Um für tiefe Temperaturen angepasst zu sein, weist die Nottrennkupplung eine Spreizdichtung auf, die eine metallische Spreizfeder enthält, welche auch bei tiefen Temperaturen eine Dichtlippe der Spreizdichtung an eine Dichtungsgegenfläche anpresst. Als Material der Dichtlippe kann Polytetrafluoräthylen oder ein gleichartiges Material verwendet werden, das bei tiefen Temperaturen nicht versprödet.

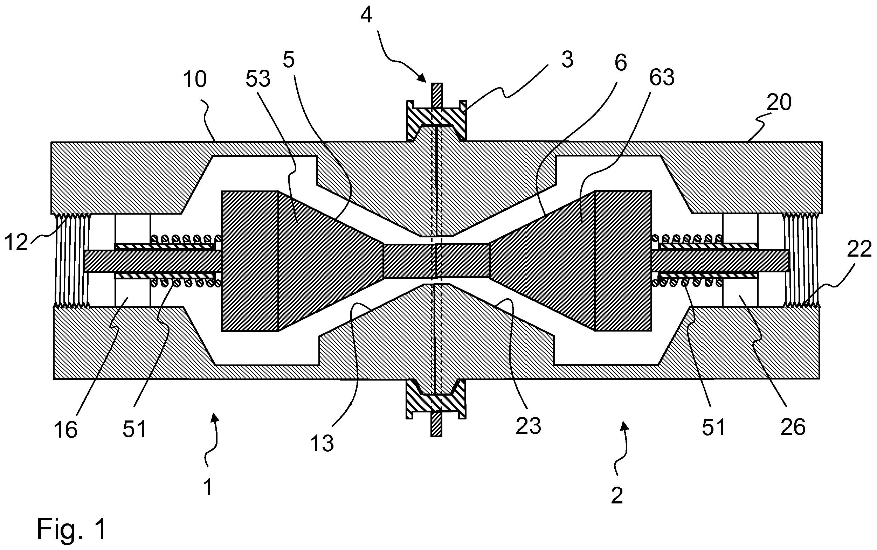

Ein Ausführungsbeispiel der Erfindung wird anhand der Zeichnung beschieben. Dabei zeigt
Fig. 1 einen Längsschnitt durch eine Nottrennkupplung
Fig.2 eine vergrößerte Einzelheit mit einem Ringsegment, und
Fig. 3 ein alternatives Ringsegment.

Die Nottrennkupplung umfasst eine erste Kupplungshälfte 1 und eine zweite Kupplungshälfte 2, die durch eine Reihe von Ringsegmenten 3 im gekuppelten Zustand gehalten werden. Die Ringsegmente 3 selbst werden durch ein Vorspannungselement 4 am Umfang der Nottrennkupplung zusammengehalten und radial nach innen gepresst.

Die erste Kupplungshälfte 1 weist ein rohrförmiges Gehäuse 10 auf, das eine Kupplungsseite 11a mit dort angebrachtem ersten anlagedichten Endflansch oder Bund 11 aufweist. Am anderen Ende der ersten Kupplungshälfte ist ein Anschlussgewinde 12 für eine weiterführende Leitung vorgesehen. Die zweite Kupplungshälfte 2 ist weitgehend spiegelbildlich zur ersten Kupplungshälfte ausgebildet und weist ein Gehäuse 20 mit einem zweiten anlagedichten Endflansch oder Bund 21 und einem zweiten Anschlussgewinde 22 auf. Jede Kupplungshälfte weist eine selbsttätig schließende Fluidsperre 5 bzw. 6 auf, die jeweils eine Feder 51 bzw. 61 und ein kegelförmiges Dichtelement 53 bzw. 63 umfassen, das mit einem konischen Dichtsitz 13 bzw. 23 zusammenarbeitet, wenn eine Nottrennung ausgelöst wird. Die Federn 51 bzw. 61 stützen sich an Querstreben 16 bzw. 26 der rohrförmigen Gehäuse 10 bzw. 20 ab.

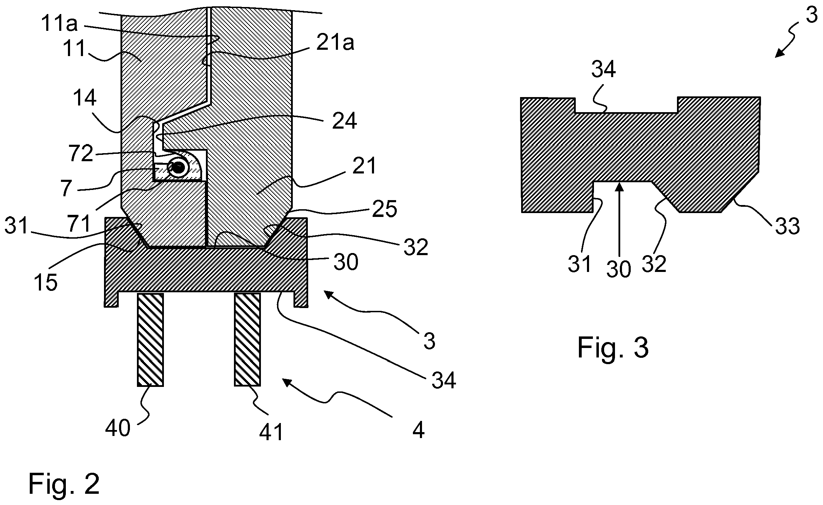

Die Endflansche oder Bunde 11 und 21 stoßen an ihrer Kupplungsseite 11a bzw. 21a aneinander (Fig. 2), die auch ineinandergreifen. Hierzu weist der erste Endflansch oder Bund 11 eine Aussparung 14 und der zweite Endflansch oder Bund 21 einen ringförmigen Axialvorsprung 24 auf. In der Aussparung 14 sitzt eine Spreizdichtung 7, die eine Spreizfeder 71 und eine Dichtlippe 72 aus Kunststoff aufweist, welche mit dem axialen Vorsprung 24 als Dichtungsgegenfläche zusammenarbeitet. Die Spreizfeder 71 in Form einer geschlossenen Schraubfeder besteht aus Metall, um auch bei tiefen Temperaturen wirksam zu sein, während für die Dichtlippe 72 Polytetrafluoräthylen oder ein Material mit ähnlichen Verhalten bei tiefen Temperaturen bevorzugt wird.

Auf der Seite abgewandt zu der Kupplungsseite 11a bzw. 21a weisen die Endflansche oder Bund 11 bzw. 21 jeweils eine Konusfläche als Schrägfläche 15 bzw. 25 auf, deren Neigungen gegeneinander gerichtet sind, wenn man in radialer Richtung von innen nach außen blickt. Die Konusspitzen der beiden erzeugenden Kegel liegen auf der Geräteachse und der Öffnungswinkel des Kegels liegt im Bereich von 65° bis 25°, wobei ein engerer Bereich von 55°bis 35° bevorzugt wird.

Die Ringsegmente 3 sind in einer Anzahl von drei oder mehreren Ringsegmenten gleichmäßig um den Umfang des Gerätes verteilt und weisen an ihrer radialen Innenseite eine Aussparung 30 auf, die der Form der radialen Enden der miteinander gekuppelten Endflansche mit den konischen Teilflächen 15 und 25 entspricht. Demgemäß entsprechen die Neigungen der Flanken 31,32 der Aussparung 30 den konischen Teilflächen 15 und 25. Die Ringsegmente 3 weisen eine weitere, äußere Aussparung 34 auf, in welche das Vorspannungselement 4 eingreift und die Ringsegment radial nach innen gegen die Konusflächen 15 bzw. 25 presst.

Das Vorspannungselement 4 kann in unterschiedlicher Gestalt erscheinen. Es kann ein geschlitzter Federring 40 oder mehrere geschlitzte Federringe 40, 41 als Vorspannungselement verwendet werden, die aus einer Ringspange mit Ösen nahe der Enden bestehen, um den geschlitzten Federring zur Montage spreizen zu können. Das Vorspannungselement kann aber auch durch Schrauben-Zugfedern gebildet werden, die sich zwischen den Ringsegmenten erstrecken und diese zusammenhalten. Auch ist es möglich, das Vorspannungselement durch eine oder mehrere geschlossenen Schraubenfedern zu realisieren, welche die Ringsegmente umschlingen. Jede Ausbildung des Vorspannungselementes ist brauchbar, wenn nur die Ringsegmente 3 federnd gegen die Anlagedichtflansche oder Bunde 11,21 gepresst werden und ausreichend starke, radial nach innen gerichtete Kräfte entwickeln.

Für das Funktionieren der Nottrennkupplung ist es nicht erforderlich, beide Flanken 31, 32 als Schrägflächen vorzusehen, um mit zwei Konusflächen 15, 25 zusammenarbeiten. Man benötigt nur eine dieser Konusflächen, während statt der anderen Konusfläche ein zylindrischer Rand gebildet sein kann. Es versteht sich, dass die Aussparung 30 in den Ringsegmenten 3 korrespondierend ausgebildet ist, wie in Fig. 3 dargestellt. Dort gibt es noch eine äußere Schrägfläche 33, die als Montagehilfe nützlich ist. Eine solche kann auch bei der Ausführungsform nach Fig. 2 vorhanden sein.

Die Arbeitsweise der Nottrennkupplung ist wie folgt:
Im Lieferzustand der Nottrennkupplung umklammern die Ringsegmente 3 die miteinander gekuppelten Endflansche oder Bunde 11, 21 infolge der durch das Vorspannungselement 4 aufgebrachten radial nach innen gerichteten Kräfte. Wegen der radialsymmetrischen Gestaltung der Nottrennkupplung kann diese in eine Lücke eines Leitungszuges durch Verschrauben mit den Leitungsenden eingefügt werden. Es wird vorausgesetzt, dass im Zuge der Leitung eine betätigbare Kupplung eingefügt ist, mit der die Leitungsverbindung zwischen einem Lieferfahrzeug und einem Tank (oder umgekehrt) vervollständigt wird. Wenn nun durch ein unerwünschtes Vorkommnis ein übermäßiger Zug auf die Leitung ausgeübt wird, üben die Konusflächen 15 bzw. 25 einen Druck auf mindestens die schräge Gegenfläche 32 der Aussparung 30 aus, wodurch wegen der Kraftzerlegung radiale, nach außen gerichtete Kräfte auf die Reihe der Ringsegmente 3 ausgeübt werden. Wenn diese Kräfte die nach innen gerichteten Haltekräfte des Vorspannungselementes 4 übersteigen, weitet sich das Vorspannungselement 4 auf und die Endflansche oder Bunde 11 bzw. 21 können aus der Aussparung 30 herausrutschen. Wenn dies geschieht, lösen sich die Kupplungshälften 1, 2 voneinander. Die Fluidsperren 5 bzw. 6 kommen dann zur Wirkung, das heißt die Federn dieser Fluidsperren schieben die Dichtkegel gegen die zugeordneten Dichtsitze 13 bzw. 23. Unerwünschter Austritt von Fluid wird dadurch verhindert.

Die Remontage der Nottrennkupplung erfolgt durch Aufweiten des Vorspannungselements 4, Zusammenschieben der Kupplungshälften 1,2 sowie Loslassen des Vorspannelementes 4, wodurch die Ringsegmente 3 den radialen Rand der ineinander greifenden Endflansche oder Bunde 11, 21 umklammern und die Nottrennkupplung ihren Funktionszustand wieder gewinnt.

Es ist somit eine robuste und einfach gebaute Nottrennkupplung beschrieben und offenbart worden, die mit anlagedichten Endflanschen 11, 21 an der ersten und zweiten Kupplungshälfte 1, 2 versehen ist. Die Endflansche 11, 21 weisen Schräg- oder Konusflächen 15, 25 auf und werden dort durch Ringsegmente 3 umklammert, die ihrerseits durch ein Vorspannungselement 4 gegen die Schräg- oder Konusflächen 15, 25 gepresst werden. Bei übermäßigem Zug auf die Kupplungshälften 1, 2 trennen sich diese gegen die Kraft des Vorspannungselementes 4.

## Patentansprüche

1. Nottrennkupplung zur Trennung zweier Leitungen bei übermäßigem Zug zwischen einer ersten und einer zweiten Kupplungsseite, umfassend:
- eine erste Kupplungshälfte (1) mit einem rohrförmigen Gehäuse (10) und einer selbsttätig schließenden Fluidsperre (5) im Inneren des Gehäuses sowie mit einer ersten anlagedichten Kupplungsseite (11a),
- eine zweite Kupplungshälfte (2) mit einem rohrförmigen Gehäuse (20) und einer selbsttätig schließenden Fluidsperre (6) im Inneren des Gehäuses und mit einer zweiten anlagedichten Kupplungsseite (21a),
- eine Reihe von Ringsegmenten (3) mit einem Querschnitt zum Umklammern der im Eingriff miteinander stehenden Kupplungsseiten (11a, 21a),
- ein Vorspannungselement (4),
- wobei wenigstens eine der Kupplungsseiten eine nach außen zur Kupplungstrennfläche geneigte Schräg- oder Konusfläche (15, 25) aufweist und die Ringsegmente (3) im Umklammerungsquerschnitt jeweils mindestens eine dazu korrespondierende Schräg- oder Konusfläche (31, 32) aufweisen, die bei gekuppelten Kupplungshälften an der Schräg- oder Konusfläche (15, 25) der zugehörigen Kupplungsseite anliegt,
- wobei an den sich gegenüberstehenden Kupplungsseiten (11a, 21a) über den Umfang der jeweiligen rohrförmigen Gehäuse vorstehende Endflansche oder Bunde (11, 21) mit den Schräg- oder Konusflächen (15, 25) vorgesehen sind,
- wobei das Vorspannungselement (4) die Ringsegmente (3) umklammert und deren Schräg- oder Konusflächen (31, 32) federnd gegen die Schräg- oder Konusflächen (15, 25) der Endflansche oder Bunde (11, 21) presst,
**dadurch gekennzeichnet dass** eine Spreizdichtung (7), die in einer Aussparung (14) des ersten Endflansches oder Bundes (11) sitzt, mit einem axialen Ringvorsprung (24) des zweiten Endflansches oder Bundes (21) als Dichtungsgegenfläche zusammenarbeitet.

2. Nottrennkupplung nach Anspruch 1,
wobei das Vorspannungselement (4) einen geschlitzten Federring (40) enthält.

3. Nottrennkupplung nach Anspruch 1,
wobei das Vorspannungselement (4) durch Zugfedern gebildet wird, die sich zwischen den Ringsegmenten (3) erstrecken und diese zusammenhalten.

4. Nottrennkupplung nach Anspruch 1,
wobei das Vorspannungselement (4) durch eine oder mehrere geschlossene Schraubenfedern gebildet wird, die die Ringsegmente (3) umschlingen.

5. Nottrennkupplung nach einem der Ansprüche 1 bis 4,
wobei der Öffnungswinkel der Konusflächen (15, 25) im Bereich von 65° bis 25°, bevorzugt zwischen 55° bis 35° liegt.

6. Nottrennkupplung nach einem der Ansprüche 1 bis 5,
wobei die Ringsegmente (3) eine äußere Schrägfläche (33) aufweisen.

7. Nottrennkupplung nach einem der Ansprüche 1 bis 6,
wobei die Enden der Kupplungshälften (1,2) entfernt von den Kupplungsseiten (11a, 21a) mit Anschlussgewinde (12, 22) für weiterführende Leitungen vorgesehen sind.

8. Nottrennkupplung nach einem der Ansprüche 1 bis 7,
wobei die Spreizdichtung (7) eine metallische Spreizfeder (71) enthält, welche auch bei tiefen Temperaturen eine Dichtlippe (72) der Spreizdichtung an eine Dichtungsgegenfläche anpresst.

## Claims

1. A safety breakaway coupling for separating two lines in the case of excessive tensile forces between a first side and a second side of a coupling, comprising:
- a first coupling half (1) comprising a tubular housing (10) and an automatically sealing fluid barrier (5) in the interior of the housing, and having a first coupling side (11a) sealing tightly when engaged;
- a second coupling half (2) comprising a tubular housing (20) and an automatically sealing fluid barrier (6) in the interior of the housing, and having a second coupling side (21a) sealing tightly when engaged;
- a series of ring segments (3) having a cross-sectional shape for embracing the coupling sides engaged on each other;
- a biasing element (4);
- wherein at least one of the coupling sides has an oblique or conical surface (15, 25) inclined outwardly relative to the separation surface of the coupling, and wherein the ring segments (3) each have at least one oblique or conical surface (31, 32) corresponding thereto in their embracing cross-sectional shape, which engages on the oblique or conical surface (15, 25) of the associated coupling side when the coupling halves are coupled;
- wherein end flanges or collars (11, 21) having said oblique or conical surfaces are provided on the opposed coupling sides (11a, 21a), projecting beyond the perimeter of the respective tubular housing;
- wherein the biasing element (4) embraces the ring segments (3) and resiliently urges the oblique or conical surfaces (31, 32) thereof against the oblique or conical surfaces (15, 25) of the end flanges or collars (11, 21);
**characterized in that**
- an expansion seal (7) which is accommodated in a recess (14) of the first end flange or collar (11) cooperates with an axial annular projection (24) of the second end flange or collar (21) as a seal mating surface.

2. The safety breakaway coupling according to claim 1,
wherein the biasing element (4) comprises a slotted spring washer (40).

3. The safety breakaway coupling according to claim 1,
wherein the biasing element (4) is formed by tension springs extending between the ring segments (3) and holding them together.

4. The safety breakaway coupling according to claim 1,
wherein the biasing element (4) is formed by one or more closed coil springs embracing the ring segments (3).

5. The safety breakaway coupling according to any one of claims 1 to 4, wherein the conical surfaces (15, 25) have an opening angle ranging from 65° to 25°, preferably between 55° and 35°.

6. The safety breakaway coupling according to any one of claims 1 to 5, wherein the ring segments (3) have an outer oblique surface (33).

7. The safety breakaway coupling according to any one of claims 1 to 6, wherein the ends of the first and second coupling halves (1, 2) remote from the coupling sides (11a, 21a) are provided with connection threads (12, 22) for continuing lines.

8. The safety breakaway coupling according to any one of claims 1 to 7, wherein the expansion seal (7) comprises a metallic expansion spring (71) which urges a sealing lip (72) of the expansion seal (7) against a seal mating surface even at deep temperatures.

## Revendications

1. Raccord de séparation de sûreté pour séparer deux conduites lors d'une traction excessive entre un premier et un second côté de raccord, comprenant :
- une première moitié de raccord (1) avec un logement tubulaire (10) et une barrière à fluide (5) à fermeture automatique à l'intérieur du logement ainsi qu'avec un premier côté de raccord (11a) hermétique par rapport à l'installation,
- une seconde moitié de raccord (2) avec un logement tubulaire (20) et une barrière à fluide (6) à fermeture automatique à l'intérieur du logement ainsi qu'avec un second côté de raccord (21a) hermétique par rapport à l'installation,
- une série de segments annulaires (3) avec une section transversale pour étreindre les côtés de raccord (11a, 21a) en prise l'un avec l'autre,
- un élément de précontrainte (4),
- dans lequel au moins l'un des côtés de raccord présente une surface oblique ou conique inclinée (15, 25) vers l'extérieur en direction de la surface de séparation de raccord et les segments annulaires (3) présentent dans la section transversale d'étreinte respectivement au moins une surface oblique ou conique (31, 32) y correspondant qui, lorsque les moitiés de raccord sont couplées, est adjacente à la surface oblique ou conique (15, 25) du côté de raccord correspondant,
- dans lequel des brides d'extrémité ou des épaulements (11, 21) saillants avec les surfaces obliques ou coniques (15, 25) sont prévus contre les côtés de raccord (11a, 21a) opposés l'un à l'autre par-dessus la circonférence des logements tubulaires respectifs,
- dans lequel l'élément de précontrainte (4) étreint les segments annulaires (3) et presse leurs surfaces obliques ou coniques (31, 32) de façon élastique contre les surfaces obliques ou coniques (15, 25) des brides d'extrémité ou des épaulements (11, 21),
**caractérisé en ce que** :
un joint d'écartement (7), qui siège dans un évidement (14) de la première bride d'extrémité ou du premier épaulement (11), coopère avec une projection annulaire (24) axiale de la seconde bride d'extrémité ou du second épaulement (21) en tant que contre-surface d'étanchéité.

2. Raccord de séparation de sûreté selon la revendication 1, dans lequel l'élément de précontrainte (4) contient une rondelle élastique (40) fendue.

3. Raccord de séparation de sûreté selon la revendication 1, dans lequel l'élément de précontrainte (4) est formé par des ressorts de traction qui s'étendent entre les segments annulaires (3) et maintiennent ceux-ci ensemble.

4. Raccord de séparation de sûreté selon la revendication 1, dans lequel l'élément de précontrainte (4) est formé par un ou plusieurs ressorts à boudin fermés qui enlacent les segments annulaires (3).

5. Raccord de séparation de sûreté selon l'une des revendications 1 à 4, dans lequel l'angle d'ouverture des surfaces coniques (15, 25) se situe dans la plage de 65° à 25°, de préférence entre 55° à 35°.

6. Raccord de séparation de sûreté selon l'une des revendications 1 à 5, dans lequel les segments annulaires (3) présentent une surface oblique (33) extérieure.

7. Raccord de séparation de sûreté selon l'une des revendications 1 à 6, dans lequel les extrémités des moitié de raccord (1, 2) sont prévues éloignées des côtés de raccord (11a, 21a) avec des filetages de raccordement (12, 22) pour d'autres conduites complémentaires.

8. Raccord de séparation de sûreté selon l'une des revendications 1 à 7, dans lequel le joint d'écartement (7) contient un ressort d'écartement (71) métallique, lequel presse une lèvre d'étanchéité (72) du ressort d'écartement contre une contre-surface d'étanchéité, y compris par des températures basses.
